# EUROPEAN PATENT APPLICATION

(11) **EP 3 851 017 A1**
(43) Date of publication of application: **21.07.2021**
(21) Application number: 20152013.7
(22) Date of filing: 15.01.2020
(51) Int. Cl.: A47L 15/42, D06F 39/04, D06F 39/08, H02S 40/10, A47L 15/16

(54) **APPARATUS FOR A HOUSEHOLD APPLIANCE AND METHOD FOR PROVIDING A FLUID IN A HOUSEHOLD APPLIANCE**

(71) Applicant: Vestel Elektronik Sanayi ve Ticaret A.S., 45030 Manisa (TR)
(72) Inventor: TOPCUOGLU, Serdar, 45030 Manisa (TR)
(74) Representative: Maikowski & Ninnemann Patentanwälte Partnerschaft mbB

(57) **Abstract**

The present disclosure relates to an apparatus (100) for a household appliance (300), and a method for providing a fluid in a household appliance. The apparatus (100) includes a flow path (P) for a fluid (F) having a magnetic substance (M); at least one electrically conductive element (110) located in the flow path (P); and a current source configured to apply a current (I) to the at least one electrically conductive element (110) to heat the at least one electrically conductive element (110) and generate a magnetic field (B).

## Description

### FIELD

Embodiments of the present disclosure relate to an apparatus for a household appliance, a household appliance having the apparatus, and a method for providing a fluid in a household appliance. Embodiments of the present disclosure particularly relate to a dishwasher capable of heating and accelerating a cleaning fluid such as water.

### BACKGROUND

A dishwasher is capable of cleaning dishes and cutlery by spraying hot water thereon. In particular, a mix of water and detergent may be pumped to one or more rotating spray arms, which spray the mixture onto the dishes and cutlery for cleaning.

Conventional dishwashers may use four elements to provide hot water, namely an electrical motor for an acceleration of the water, a spiral-shaped mechanical accelerator, a water outlet nozzle, and a resistance heater. Such a system consumes considerable energy and suffers from energy losses. Further, a mechanical design of these elements is rather complex, requires considerable material, and is costly.

In view of the above, new apparatuses for a household appliance, household appliances having the apparatus, and methods for providing a fluid in a household appliance that overcome at least some of the problems in the art are beneficial.

### SUMMARY

In light of the above, an apparatus for a household appliance, a household appliance having the apparatus, and a method for providing a fluid in a household appliance are provided.

It is an object of the present disclosure to provide a simplified structure for heating and accelerating a cleaning fluid in a household appliance such as a dishwasher.

Further objects, aspects, benefits, and features of the present disclosure are apparent from the claims, the description, and the accompanying drawings.

According to an independent aspect of the present disclosure, an apparatus for a household appliance, such as a dishwasher, is provided. The apparatus includes a flow path for a fluid having a magnetic substance; at least one electrically conductive element located in the flow path; and a current source configured to apply a current to the at least one electrically conductive element to heat the at least one electrically conductive element and generate a magnetic field.

According to a further independent aspect of the present disclosure, a household appliance, such as a dishwasher, is provided. The household appliance includes the apparatus for a household appliance according to the embodiments of the present disclosure. The apparatus particularly includes a flow path for a fluid having a magnetic substance; at least one electrically conductive element located in the flow path; and a current source configured to apply a current to the at least one electrically conductive element to heat the at least one electrically conductive element and generate a magnetic field.

According to a further independent aspect of the present disclosure, a method for providing a fluid in a household appliance, such as a dishwasher, is provided. The method includes providing a current to at least one electrically conductive element to heat the at least one electrically conductive element and generate a magnetic field, wherein the at least one electrically conductive element is located in a flow path of a fluid having a magnetic substance; and heating the fluid by the heated at least one electrically conductive element and accelerating the fluid by the magnetic field.

Embodiments are also directed at devices for carrying out the disclosed methods and include apparatus parts for performing each described method aspect. These method aspects may be performed by way of hardware components, a computer programmed by appropriate software, by any combination of the two or in any other manner. Furthermore, embodiments according to the disclosure are also directed at methods for operating the described apparatus. The methods include method aspects for carrying out every function of the apparatus for a household appliance.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic view of an apparatus for a household appliance according to embodiments described herein;
- FIGs. 2A and B: show schematic views of an apparatus for a household appliance according to embodiments described herein;
- FIG. 3: shows a perspective view of a dishwasher according to embodiments described herein; and
- FIG. 4: shows a flowchart of a method for providing a fluid in a household appliance according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

In a dishwasher, a mix of water and detergent is pumped to rotating spray arms, which spray the mixture onto dishes and cutlery. Conventional systems may have a complex mechanical design. Further, conventional systems may suffer from energy losses and/or consume considerable energy.

The embodiments of the present disclosure overcome these drawbacks by means of at least one electrically conductive element which is heated and generates a magnetic field. Thereby, the at least one electrically conductive element provides a double function, namely a heating of the fluid as well as an acceleration of the fluid. Accordingly, a simplified mechanical design can be provided, and an energy consumption can be reduced. Further, the fluid has a magnetic substance which is not only cheap but may also be less harmful to the environment than detergents used in conventional dishwashers.

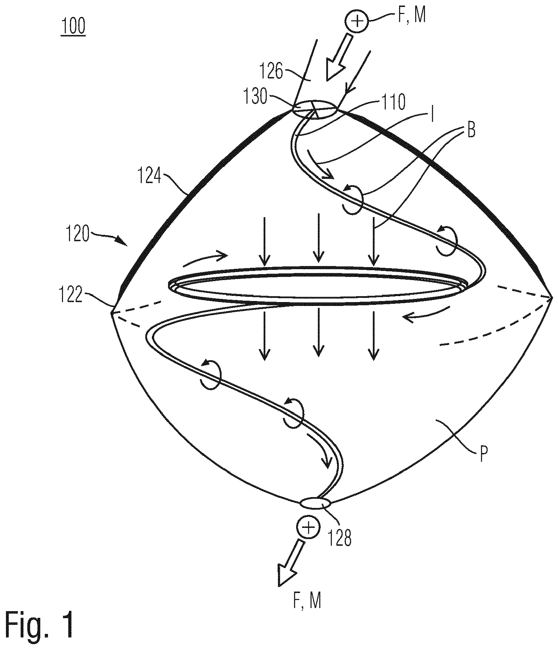

FIG. 1 shows a schematic view of an apparatus 100 for a household appliance according to embodiments described herein. The household appliance may be a dishwasher but the embodiments of the present disclosure are not limited thereto.

The apparatus 100 includes a flow path P for a fluid F having a magnetic substance M; at least one electrically conductive element 110 located in the flow path P; and a current source (not shown) configured to apply a current I to the at least one electrically conductive element 110 to heat the at least one electrically conductive element 110 and generate a magnetic field B.

Accordingly, the apparatus 100 integrates two functional aspects, namely accelerating and heating the fluid F, in a single constructional arrangement, i.e. the at least one electrically conductive element 110. In particular, both functional aspects of accelerating and heating the fluid F may be carried out simultaneously by a single constructional arrangement.

According to some embodiments, which can be combined with other embodiments described herein, the magnetic substance M includes, or consists of, positive ions. For example, the magnetic substance M is selected from the group including, or consisting of, sodium (Na), potassium (K), and a combination thereof.

In some implementations, the fluid F may be water which includes positive ions. Optionally, the fluid F may further contain a detergent. Thus, the fluid F may also be referred to as "cleaning fluid".

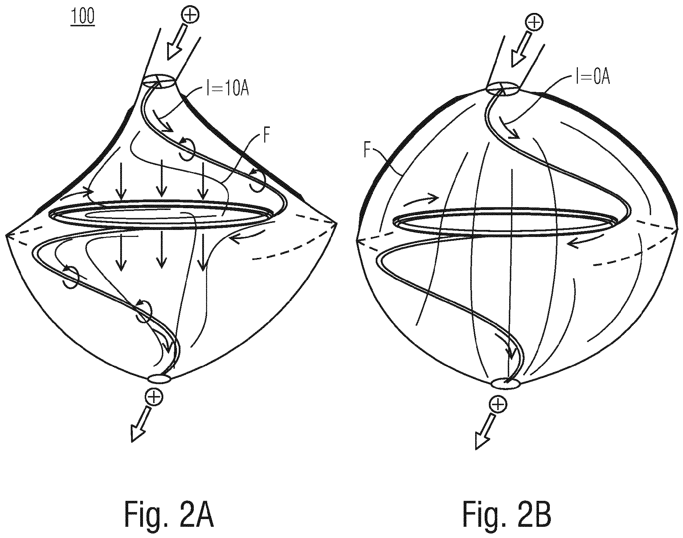

Water molecules may stick to the positive ions of the magnetic substance due to a cohesion force. When the magnetic field B acts on the positive ions, the positive ions and thus the water are guided essentially along an extension direction of the at least one electrically conductive element 110 (see FIG. 2A). Accordingly, the water increases its speed while it is heated by the at least one electrically conductive element 110.

In some embodiments, the water may be mixed with a positively ionized chemical compound such as sodium (Na) or potassium (K), which are environmentally friendly, before the water enters the apparatus 100 via a fluid inlet. Sodium and potassium are soluble in salty cleaning water. This chemical compound may be produced as a powder additive or may by contained in a detergent. The water mixed with the chemical compound may be introduced in the flow path F of the apparatus 100 using a fluid pump or a pressure of a water network.

According to some embodiments, which can be combined with other embodiments described herein, the at least one electrically conductive element 110 is curved. In some examples, the at least one electrically conductive element 110 essentially extends in a spiral shape. In other words, the at least one electrically conductive element 110 may be configured as a spiral. The long spiral can further increase a speed of the fluid F which is guided along an extension direction thereof by the magnetic field B.

In some implementations, a pitch of the spiral varies along the spiral, as it is illustrated in FIG. 1. Thereby, the magnetic field B can be suitably provided in the flow path P.

In some embodiments, the at least one electrically conductive element 110 is a wire, such as a copper wire. In particular, the at least one electrically conductive element 110 may include, or be made of, copper. However, the present disclosure is not limited thereto, and other electrically conductive materials may be used in further embodiments.

According to some embodiments, which can be combined with other embodiments described herein, the apparatus 100 includes a casing 120 which at least partially defines the flow path P in an interior thereof. For example, the casing 120 may have a hollow interior which includes, defines or is the flow path P. The at least one electrically conductive element 110 may be arranged in the interior of the casing 120.

The casing 120 may have an essentially spherical shape.

In some implementations, the casing 120 includes a base material 122 and a magnetic material 124 disposed on at least a part of the base material 112. For example, the magnetic material 114 may cover at least a part of an outer surface and/or at least a part of an inner surface of the base material 112. In particular, the base material 112 may have the outer surface and the inner surface opposite the outer surface. The inner surface may face the flow path P. The magnetic material 124 may cover the outer surface and/or the inner surface of the base material 122 partially or entirely.

The magnetic material 124 may cover at least a part of the outer surface of the base material 122 and may not be disposed on the inner surface. In an alternative embodiment, the magnetic material 124 may cover at least a part of the inner surface of the base material 122 and may not be disposed on the outer surface. In a further alternative embodiment, the magnetic material 124 may cover at least a part of the inner surface of the base material 122 and may cover at least a part of the outer surface of the base material 122.

The magnetic material 124 may cover the outer surface and/or the inner surface of the base material 132 partially or entirely. In some embodiments, the magnetic material 124 may cover only an upper part of the outer surface and/or the inner surface of the base material 122. For example, the magnetic material 124 may cover only an upper half (or less than the upper half) of the outer surface and/or the inner surface of the base material 122, as it is exemplarily illustrated in the embodiment of FIG. 1.

According to some embodiments, which can be combined with other embodiments described herein, the base material 122 is an elastic material such as rubber. Additionally, or alternatively, the magnetic material 124 is a ferromagnetic material.

According to some embodiments, which can be combined with other embodiments described herein, the magnetic field B generated by the at least one electrically conductive element 110 is configured to deform the casing 120. For example, the magnetic field B acts on the magnetic material 124 adhering to the base material 122 such that the base material 122 is deformed. The casing 120 may be deformed inwards to reduce a volume of the interior of the casing 120. The deformation of the casing 120 may further accelerate the fluid F flowing therethrough.

In more detail, the casing 120 may include a fluid inlet 126 and a fluid outlet 128. The magnetic field B generated by the at least one electrically conductive element 110 may be configured to deform the casing 120 inwards to reduce a volume of the interior of the casing 120, thereby accelerating the fluid F flowing from the fluid inlet 126 to the fluid outlet 128.

In some implementations, a conductive grid 130 may be provided at the fluid inlet 126. In particular, the conductive grid 130 may cover the fluid inlet 126. The conductive grid 130 may assist in the guidance of the fluid F into the interior of the casing 120.

As it is illustrated in FIG. 1, the fluid F enters an upper side of the apparatus 100 via the fluid inlet 126 and exits the apparatus 100 at a lower side via the fluid outlet 128. The upper side and the lower side of the apparatus 100 may be defined with respect to a vertical direction perpendicular to the force of gravity. Accordingly, the force of gravity acts on the fluid F, thereby further accelerating the fluid F towards the fluid outlet 128.

The at least one electrically conductive element 110 may be a spiral which extends from the fluid inlet 126 to the fluid outlet 128. The at least one electrically conductive element 110 generates the magnetic field B which affects an orientation of the magnetic substance M in the fluid F and thus accelerates the fluid F. At the same time, the fluid F is heated during the acceleration process by means of the current I which flows through the at least one electrically conductive element 110 and heats the at least one electrically conductive element 110.

The current I may be applied to the at least one electrically conductive element 110 (or triggered) using a microcontroller (not shown) e.g. while a fluid pump is on and running. The microcontroller may include suitable software to control the provision of the current I to the at least one electrically conductive element 110.

With an increasing current I, a temperature of the at least one electrically conductive element 110 increases and the magnetic field B is generated around the at least one electrically conductive element 110. The positively ionized water molecules track the spiral shape of the electrically conductive element 110 and get faster along a direction of the spiral due to a magnetic force. The longer the spiral path, the faster the molecules get.

At the same time, a temperature of the water molecules increases because the current I flowing through the at least one electrically conductive element 110 provides a resistance heater.

An exemplary operation of the apparatus 100 is illustrated in FIGs. 2A and B, which show schematic views of an apparatus 100 for a household appliance according to embodiments described herein.

Referring to FIG. 2A, the fluid F enters the casing via the fluid inlet. The fluid F includes a chemical compound having positive ions, i.e., a magnetic substance. By including the magnetic substance, a cleaning efficiency of dishes and cutlery can be improved and an amount of detergent in the cleaning fluid, which may be harmful to the environment, may be reduced.

The current I flowing through the at least one electrically conductive element can be controlled with a microcontroller. When the magnetic field is increased, an upper side of the elastic casing, that is covered by a ferromagnetic material, is deformed to press the water in the casing. Thus, the speed of the fluid F increases.

According to some embodiments, which can be combined with other embodiments described herein, the current may be turned on (FIG. 2A) and off (FIG. 2B) repeatedly with a predefined (switching) frequency to achieve a mechanical pumping effect.

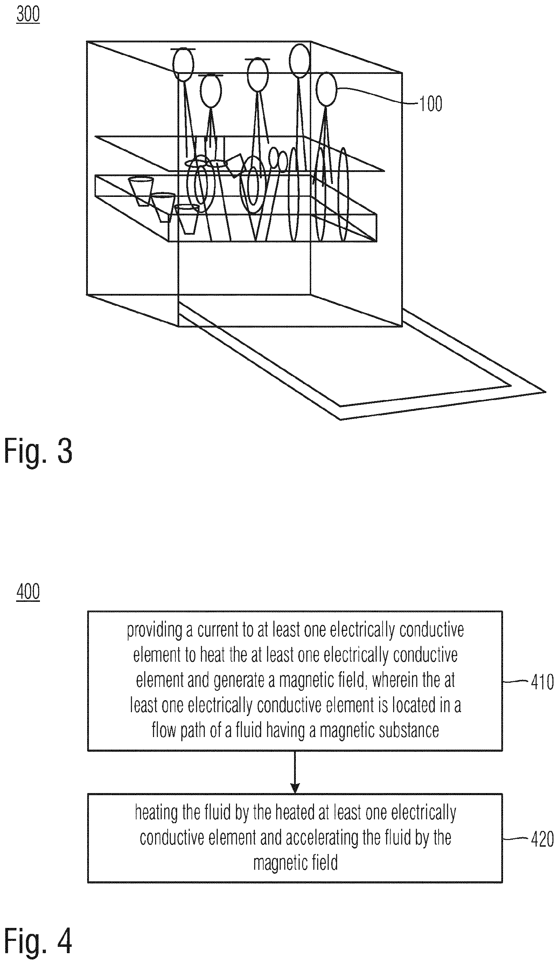

FIG. 3 shows a perspective view of a dishwasher 300 according to embodiments described herein.

The dishwasher 300 includes one or more apparatuses 100 according to the embodiments of the present disclosure. The one or more apparatuses 100 may be located at an upper side of a cabinet of the dishwasher 300. Additionally, or alternatively, the one or more apparatuses 100 may be located on (rotating) spray arms of the dishwasher 300.

The dishwasher 300 may be a tabletop dishwasher or a conventionally sized dishwasher. However, the present disclosure is not limited thereto and the dishwasher 300 may have any size suitable for particular applications.

It is to be understood that the present disclosure is not limited to dishwashers and that the apparatus can be used in other household applications, such as washing machines and solar panel cleaning devices.

FIG. 4 shows a flowchart of a method 400 for providing a fluid in a household appliance according to embodiments described herein.

The method 400 includes in block 410 a providing of a current to at least one electrically conductive element to heat the at least one electrically conductive element and generate a magnetic field, wherein the at least one electrically conductive element is located in a flow path of a fluid having a magnetic substance; and in block 420 a heating of the fluid by the heated at least one electrically conductive element and accelerating the fluid by the magnetic field.

According to the embodiments of the present disclosure, at least one electrically conductive element is provided which is heated and generates a magnetic field. Thereby, the at least one electrically conductive element provides a double function, namely a heating of the fluid as well as an acceleration of the fluid. Accordingly, a simplified mechanical design can be provided, and an energy consumption can be reduced. Further, the fluid has a magnetic substance which is not only cheap but may also be less harmful to the environment than detergents used in conventional dishwashers.

While the foregoing is directed to embodiments of the disclosure, other and further embodiments of the disclosure may be devised without departing from the basic scope thereof, and the scope thereof is determined by the claims that follow.

## Claims

1. An apparatus (100) for a household appliance (300), comprising:
a flow path (P) for a fluid (F) having a magnetic substance (M);
at least one electrically conductive element (110) located in the flow path (P); and
a current source configured to apply a current (I) to the at least one electrically conductive element (110) to heat the at least one electrically conductive element (110) and generate a magnetic field (B).

2. The apparatus (100) of claim 1, wherein the magnetic substance (M) includes positive ions.

3. The apparatus (100) of claim 1 or 2, wherein the magnetic substance (M) is selected from the group consisting of sodium, potassium, and a combination thereof.

4. The apparatus (100) of any one of claims 1 to 3, wherein the at least one electrically conductive element (110) is curved.

5. The apparatus (100) of any one of claims 1 to 4, wherein the at least one electrically conductive element (110) extends in a spiral shape.

6. The apparatus (100) of any one of claims 1 to 5, wherein the at least one electrically conductive element (110) is a wire.

7. The apparatus (100) of any one of claims 1 to 6, wherein the at least one electrically conductive element (110) includes, or is made of, copper.

8. The apparatus (100) of any one of claims 1 to 7, further including a casing (120) which at least partially defines the flow path (P) in an interior thereof.

9. The apparatus (100) of claim 8, wherein the casing (120) includes a base material (122) and a magnetic material (124) disposed on at least a part of the base material (122).

10. The apparatus (100) of claim 9, wherein the base material (122) is an elastic material and/or wherein the magnetic material (124) is a ferromagnetic material.

11. The apparatus (100) of any one of claims 8 to 10, wherein the magnetic field (B) generated by the at least one electrically conductive element (110) is configured to deform the casing (120).

12. The apparatus (100) of claim 11, wherein the casing (120) includes a fluid inlet (126) and a fluid outlet (128), and wherein the magnetic field (B) generated by the at least one electrically conductive element (110) is configured to deform the casing (120) to accelerate the fluid (F) flowing from the fluid inlet (126) to the fluid outlet (128).

13. A household appliance (300), comprising the apparatus (100) of any one of claim 1 to 12.

14. The household appliance (100) of claim 13, wherein the household appliance (300) is a dishwasher, a washing machine or a solar panel cleaning device.

15. A method (400) for providing a fluid in a household appliance, comprising:
providing (410) a current to at least one electrically conductive element to heat the at least one electrically conductive element and generate a magnetic field, wherein the at least one electrically conductive element is located in a flow path of a fluid having a magnetic substance; and
heating (420) the fluid by the heated at least one electrically conductive element and accelerating the fluid by the magnetic field.
